# EUROPEAN PATENT SPECIFICATION

(11) **EP 3 686 511 B1**
(45) Date of publication and mention of the grant of the patent: **12.05.2021**
(21) Application number: 19462001.9
(22) Date of filing: 22.01.2019
(51) Int. Cl.: F24T 10/17, E21B 36/00, F24T 10/00

(54) **GEOTHERMAL WELL, METHOD OF ESTABLISHING THEREOF AND METHOD FOR GEOTHERMAL ENERGY PRODUCTION**
GEOTHERMISCHES BOHRLOCH, VERFAHREN ZU DESSEN HERSTELLUNG UND VERFAHREN ZUR GEOTHERMISCHEN ENERGIEGEWINNUNG
PUITS GÉOTHERMIQUE, SON PROCÉDÉ D'ÉTABLISSEMENT ET PROCÉDÉ DE PRODUCTION D'ÉNERGIE GÉOTHERMIQUE

(43) Date of publication of application: 29.07.2020
(73) Proprietor: GeoMax Project Kft., 2040 Budaörs (HU)
(72) Inventor: György, Zoltán Árpád, 1125 Budapest (HU); Bánhidi, István, 1114 Budapest (HU)
(74) Representative: Danubia Patent & Law Office LLC

(56) References cited:
- EP-A1- 2 639 529
- WO-A1-2013/064162
- CH-A5- 658 513
- DE-A1- 19 953 072
- DE-A1-102012 104 873
- GB-A- 2 549 832
- US-A- 4 052 857

## Description

The present invention relates to a geothermal well, to a method of establishing a geothermal well and to a method for geothermal energy production. In particular, the object of the present invention is a geothermal well obtained by transforming hydrocarbon wells not in use, i.e. abandoned or shut-down hydrocarbon wells, and an improved efficiency method for geothermal energy production by a well formed in this way.

Tens of thousands of wells are drilled annually worldwide for the purposes of producing hydrocarbons and exploring hydrocarbon reservoirs. A significant fraction of these wells are not used for hydrocarbon production for a number of reasons, for example due to the lack of the sought hydrocarbon reservoirs or their amount being less than expected, geological properties preventing the production or making it economically unfeasible, political or other business considerations. Furthermore, the operation of production wells also loses its economical feasibility due to the exhaustion of the reservoirs. Wells that are not used and that are not planned to be used in the near future shall be abandoned according to environmental regulations, i.e. the borehole shall be closed, the tubes placed in the ground shall be removed from an upper portion of the well, and the surface shall be restored to its state prior to drilling, usually to a state suitable for agricultural production. The associated additional costs mean a net loss for the drilling company in the case of exploratory wells which turn out never to produce any income.

These wells often penetrate into the Earth's crust to a depth of 4 km to 6 km, which means that the temperature at the bottom of the well is often above 100 degrees Celsius depending on the geographical location or more precisely on the local geological properties. Instead of abandoning these wells, they may be used for geothermal energy production, i.e. for 'heat mining', namely for bringing subsurface heat to the surface. The purpose of geothermal energy production may be producing a warm heating medium for heating e.g. buildings, or producing electrical power. Heat energy may be produced directly via the heat energy of a warm fluid extracted from a subsurface reservoir, which medium may be optionally resupplied to the reservoir via injection carried out by a nearby well. This solution requires a sufficiently porous rock, i.e. the reservoir has to allow fluid flow between the injection well and the production well, or the rock has to be fractured artificially, which has significant problems of its own. A further significant environmental concern associated with this method is related to the disposal of the extracted medium and providing a suitable composition for the injected medium. Heat energy may also be brought to the surface by providing a closed circulation loop in the well, wherein a heat transporting medium is circulated, which either transfers its heat energy to a working medium on the surface or the working medium itself is circulated down to the well bottom and is used for doing work on the surface. This solution poses less environmental risks, but the amount of the rocks serving as a heat source in each well is lower and thus the maximal performance obtainable for each well is also lower.

The U.S. Patent No. 5,862,866 discloses a geothermal well and a geothermal energy production method, wherein the geothermal well comprises coaxially arranged tubes, the innermost one of which is a thermally insulated production tube. A fluid is introduced down into an annular space between the production tube and the casing tube directly surrounding it, and the fluid flows up to the surface through the thermally insulated production tubing. The thermal insulation of the production tubing reduces the heat loss of the fluid heated in the deep during its ascent to the surface, and thus increases the efficiency of geothermal energy production, because the efficiency is in direct relationship with the difference between the temperature of the fluid introduced into the well and the temperature of the fluid extracted from the well.

The use of the complex, double walled heat insulated production tubing described in said patent document increases the efficiency, however it also significantly increases the costs of establishing a well due to the higher costs of the production tubing.

The German Patent Application No. DE19953072 discloses a geothermal well, a method of establishing thereof, and a method for geothermal energy production. The geothermal well comprises an inner tube, a cladding tube surrounding the inner tube and an outer tube surrounding the cladding tube, arranged coaxially with each other and introduced into the wellbore together when the wellbore is drilled. A bottom section of the inner tube and the cladding tube are provided with openings for allowing the radial transfer of working fluid into an inner space of the inner tube from an annular space between the cladding tube and the outer tube, and wherein a heat insulating medium is arranged in an annular space between the inner tube and the cladding tube and fluid movement is prevented into and out of this annular space by sealing it at a location above said openings.

The cladding tube and inner tube in this solution substantially forms a double walled heat insulated production tubing that is similar to the one disclosed in the U.S. Patent No. 5,862,866, and its operation is essentially the same. The cost-efficiency of the geothermal well of DE19953072 arises from the fact that the borehole is drilled with the purpose of establishing a geothermal well and thus the introduction of the well components is performed simultaneously with the drilling, while its increased power production capacity is provided by throttling elements and flow-deflecting helical blades arranged in the annular space between the cladding tube and the outer tube. A drawback of this solution is that it is not suitable to be used for utilizing abandoned hydrocarbon wells, because the helical blades would be damaged when pushed down into a tube already fixed into the wellbore, they can only be inserted safely together with the cladding tube and outer tube. Furthermore the assembly comprising the inner tube, cladding tube, throttling members, even without the helical blades, is either too bulky for introduction into the relatively narrow tubes of hydrocarbon wells reaching sufficient depths for geothermal power production or provides only a very limited thermal insulation due to the size restrictions.

The operation efficiency and the cost of establishing a geothermal well are of critical importance for the economical feasibility of geothermal wells. Accordingly there is a great need for solutions providing high efficiency geothermal energy production in a cost-efficient manner.

The object of the present invention is to eliminate or at least alleviate the drawbacks of the known solutions by providing a high efficiency geothermal well, which can be established more cost-efficiently.

In one aspect, the aforementioned objects are achieved by developing the geothermal well according to claim 1; preferred exemplary embodiments thereof are set out in claims 2 to 9. In a further aspect, the aforementioned objects are achieved by elaborating a method for establishing a geothermal well according to claim 10; a preferred exemplary variant thereof is set out in claim 11. In a yet further aspect, the aforementioned objects are achieved by elaborating a method for geothermal energy production; preferred exemplary variants thereof are set out in claims 13 to 16.

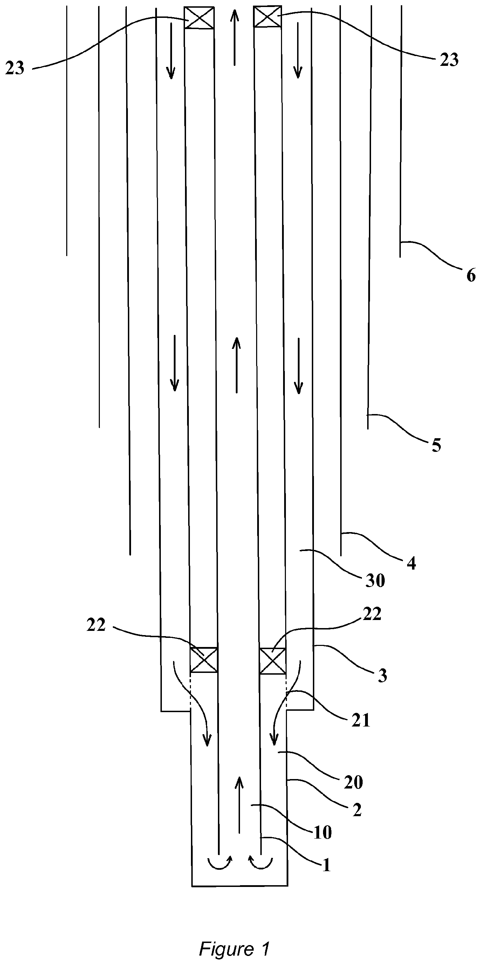

The geothermal well according to the invention, especially the preferred embodiments and the operation thereof will now be described in detail with reference to the accompanying drawings, wherein - Figure 1 shows a preferred exemplary embodiment of the geothermal well according to the invention in a longitudinal sectional view.

The geothermal well according to the invention is based on the substantial recognition that it is particularly cost-efficient to utilize hydrocarbon wells not in use into which at least one, preferably two gastight casing tubes have been inserted during the drilling. This is not typical in the case of wells for producing crude oil, and also not really typical in the case of wells for producing natural gas. The innermost casing tube in natural gas wells is sometimes gastight, but more often it is not: only the production tubing arranged therein is gastight and a packer surrounding the production tube is used for sealing the innermost casing tube. The reason of this is that the depth of the reservoir of crude oil and natural gas is relatively well defined and it can be determined in advance, thus there is no danger of incursion of high pressure medium above the production zone. However, in the case of shale gas wells, the depth of the reservoir is a lot more uncertain, thus amongst the casing tubes - reaching deeper and deeper and having smaller and smaller diameters - often not only the innermost casing tube (reaching a depth of for example 6000 meters) has a gastight configuration, but also the tube surrounding it, which is reaching a depth of for example 3500 meters.

The presence of one gastight casing tube allows the creation of the sought closed loop by closing the bottom of the casing tube and inserting a thermally insulated production tube, but this system has either limited efficiency or requires the use of a production tube with relatively complex and expensive thermal insulation.

The inventive idea is that the presence of more than one gastight casing tube allows to provide a better and more cost-efficient thermal insulation for the warm fluid flowing upward in the production tubing.

Figure 1 shows a preferred exemplary embodiment of the geothermal well according to the invention in a schematic longitudinal sectional view. In this embodiment the well comprises six tubes arranged coaxially with each other. A first tube 1, having the innermost location, is formed by a production tubing, at least a portion of which is thermally insulated. The first tube 1 is surrounded by a second tube 2, formed by a preferably gastight casing tube, which is preferably sealed at its bottom in a gastight manner. There is a first interspace 20 between the first tube 1 and the second tube 2. The second tube 2 is surrounded by a third tube 3 formed by a casing tube, which is also preferably gastight and is connected at its bottom to the second tube 2 preferably in a gastight manner. The third tube 3 is surrounded by a fourth tube 4, that is surrounded by a fifth tube 5, which is surrounded by a sixth tube 6, which are placed into the ground during the drilling operations in a manner known to a person skilled in the art in order to facilitate the drilling, their importance in relation to the invention is insignificant.

The sixth tube 6 is surrounded by concrete or soil/rocks removed at the beginning of the drilling operations; the fifth tube 5 is usually surrounded by concrete along its whole length; the fourth tube 4 is surrounded by concrete along at least a part of its length, and optionally surrounded by a packer fluid along a part of its length. The third tube 3 is surrounded by concrete along at least a part of its length, and is optionally surrounded along a part of its length by a packer fluid with preferably high heat conductance. The second tube 2 is surrounded by the third tube 3 along a part of its length and a second interspace 30 is present between the second tube 2 and the third tube 3, which second interspace 30 allows the flow of a fluid.

The tubes are preferably of circular cross-section and are preferably arranged coaxially, and thus the interspaces are preferably annular spaces, but it is also possible to devise a solution, where one or more of the tubes have non-circular closed cross-sections, which are arranged inside one another not necessarily in a coaxial manner. The first tube is preferably formed by a production tubing with a configuration known to a person skilled in the art, while the other tubes are formed by casing tube strings with a configuration known to a person skilled in the art, which are formed by a plurality of segments having lengths and numbers selected suitably to the parameters of each well.

Above the bottom of the third tube 3, preferably in the proximity of the bottom of the third tube 3, the second tube 2 comprises at least one, preferably a plurality of through-holes 21, particularly it is perforated, and thus a fluid may flow from the third tube 3 into the second tube 2. Between the first tube 1 and the second tube 2 a first interspace 20 is formed, having a first sealing element 22, preferably a packer, arranged therein above the through-holes 21. The sealing element prevents fluid flow from the through-holes to the surface in the first interspace. The first interspace 20 is preferably filled with a thermally insulating material above the through-holes 21, which may be any thermally insulating material known to a person skilled in the art, for example air or another gas on atmospheric pressure, above atmospheric pressure or below atmospheric pressure, or a solidified closed cell foam, e.g. polyurethane foam. The first sealing element 22 is preferably arranged directly above the through-holes 21, in which case the heat insulating material is above the sealing element 22. In a further possible embodiment, the sealing element 22 is above the through-holes 21 and separated by a distance therefrom, in which case the first interspace 20 between the sealing element 22 and the through-holes 21 is filled with the fluid, which is used for heat transport and/or as working fluid in the well, or optionally the vapor thereof, which may also serve as heat insulation.

A further sealing element 23 is optionally arranged in the first interspace 20 above the first sealing element 22. Said further sealing element 23 facilitates the preservation of the properties of the heat insulating material present in the first interspace 20 between the first sealing element 22 and the second sealing element 23, e.g. the composition and pressure thereof. At least the portion of the first tube 1, which is below the perforations, is thermally insulated, and preferably the whole length thereof is thermally insulated. In the exemplary embodiment shown in Figure 1, the bottom of the first tube 1 is open, but this is not necessary. A fluid communication between the inside 10 of the first tube 1 near the bottom and the first interspace 20 may also be established in another way, for example by providing through-holes/perforation in the side wall of the first tube 1.

In the exemplary embodiment shown in Figure 1, the nominal diameters of the tubes from the outermost tube to the innermost tube may be in respective order e.g. 24 inch, 18 5/8 inch, 13 ¾ inch, 9 5/8 inch, 5 ½ inch, 2 7/8 inch, i.e. approximately 610 mm, 473 mm, 349 mm, 244 mm, 140 mm, 73 mm. The depth of the bottom end of the tubes from the outmost tube to the innermost tube respectively may be e.g. 30 m, 200 m, 2000 m, 3500 m, 6000 m, 5990 m. Determining the size, necessary wall thickness and material of the tubes according to the depth and types of surrounding rocks is an obvious task for a person skilled in the art. The second tube 2 and the third tube 3 is preferably gastight: either gastight casing tubes were inserted originally when forming the well or the non-gastight casing tubes have been replaced with gastight tubes or have been modified to be gastight. The second tube 2 is preferably selected to be able to withstand the highest pressures the formation rocks may apply on the tubes in the depth of 6000 meters, i.e. a pressure load of about 144 MPa, while the third tube 3 is selected to withstand 84 MPa pressure load. Figure 1 shows the tubes as straight and in vertical orientation, but it is known to a person skilled in the art, that the tubes may have orientation other than vertical and that they may take turns. The upper end of the tubes are usually in the proximity of the ground surface, but this is not necessary for the present invention. The upper end of the tubes may be several meters below the surface or the tubes may continue above the surface.

The aforementioned exemplary depth and tubing size values present a highly preferred embodiment at a geographical location, where the value of the geothermal gradient is at least 30°C/km, i.e. the temperature of the rock formations in the depth of 6000 meters is about 180°C, because at this temperature working mediums with low boiling points known to a person skilled in the art, may be used for doing work with an acceptable efficiency. Obviously, shallower wells may be used with similar efficiency at a geographical location with higher geothermal gradient. For example, if the value of the geothermal gradient is 60°C/km, it is sufficient for the bottom end of the second tube 2 to be in a depth of 3000 meters, the bottom end of the third tube 3 to be in a depth of 1500 meters, and thus it is sufficient to select their dimensions to withstand 72 MPa and 36 MPa pressures, respectively, and also fewer further tubes may be used for facilitating the drilling operations.

A further object of the invention is a method for establishing a geothermal well as described above. The method comprises transforming an already existing well, preferably a hydrocarbon production well, more preferably a shale gas production well or a well established for exploring hydrocarbon reservoirs, into a geothermal well according to the invention as described above. Prior to starting the transformation operations, the second tube 2 and the third tube 3 are already present in the well. Optionally, a fourth tube 4 surrounding the third tube 3, a fifth tube 5 surrounding the fourth tube 4 and a sixth tube 6 surrounding the fifth tube 5 are also present in the well, but the presence of these is not necessary, their number may be more or less than that. The method comprises forming through-holes 21 in the second tube 2 above the bottom the third tube 3, preferably in the proximity of the bottom of the third tube 3, preferably by perforating the second tube 2; inserting a first tube 1 into the second tube 2, wherein at least a portion of said first tube 1 is thermally insulated; placing a sealing element 22 into a first interspace 20 between the fist tube 1 and the second tube 2 above the through-holes 21; providing a heat insulating material in the first interspace 20 above the first sealing element 22, e.g. air or a different gas on atmospheric pressure, optionally on reduced pressure, or a solid insulating material, e.g. cured polyurethane foam or mineral wool. The method optionally comprises placing a second sealing element 23 into the first interspace 20 above the first sealing element 22. The special advantage of utilizing shale gas wells is that the second tube 2 and third tube 3 are already gastight even before establishing the geothermal well, i.e. their walls and the connections of their segments are of gastight construction and thus it is not necessary to make them gastight by a further operation. A yet further object of the invention is a method for geothermal energy production by using the geothermal well described above. The method comprises introducing a fluid into the second interspace 30 of the geothermal well described above; guiding the fluid from the second interspace 30 through the through-holes 21 of the second tube 2 into the first interspace 20; guiding the fluid from the first interspace 20 through the at least one opening of the first tube 1 into the first tube 1 and bringing the fluid to the surface through the first tube 1, and extracting heat from the fluid. Arrows in Figure 1 indicate the direction of fluid flow according to the method.

The method preferably comprises using the fluid brought to the surface directly for power generation by guiding the fluid brought up through the first pipe 1 onto a turbine, which drives an electric generator, guiding the fluid out of the turbine and condensing it, then introducing it back into the second interspace 30. A further preferred variant of the method comprises transferring heat from the heated fluid that is brought to the surface to a working medium. In this case the fluid is preferably water and the working medium is preferably propane or any other working medium with low boiling point known to a person skilled in the art, e.g. R22, R134a or R125. The working medium used in both variants is preferably selected so that its boiling point, and preferably also its critical temperature, is below the temperature of the rock formations in the first depth around the geothermal well. The working medium is preferably used in an organic Rankine cycle. A further possibility for extracting the heat of the heated fluid brought to the surface is using it directly for heating purposes either for buildings or chemical reactors.

## Claims

1. A geothermal well comprising in a wellbore formed in the Earth's crust:
a fist tube (1) comprising at least one opening in a first depth and having a first inner diameter, a first outer diameter, and a side wall which is thermally insulated along at least a segment thereof;
a second tube (2) having a closed bottom in a second depth, a second inner diameter larger than the first outer diameter, and a second outer diameter;
a third tube (3), formed by a casing tube, having a closed bottom in a third depth, a third inner diameter larger than the second outer diameter, and a third outer diameter,
wherein the first tube (1) is inside the second tube (2), a first interspace (20) is formed between the first tube (1) and the second tube (2), wherein the first tube (1) has at least one opening in fluid communication with the first interspace (20),
wherein the second tube (2) is inside the third tube (3), a second interspace (30) is present between the second tube (2) and the third tube (3);
a plurality of through-holes (21) are formed in the second tube (2) above the bottom of the third tube (3), which allow fluid communication between the first interspace (20) and the second interspace (30), a first sealing element (22) is disposed in the first interspace (20) above the through-holes (21) for preventing an upward flow of fluid in the first interspace (20), and a heat insulating material is disposed in at least a portion of the first interspace (20) above the through-holes (21),
**characterized in that**
the second tube (2) is formed by a casing tube,
wherein the third depth is smaller than the second depth, the first depth is smaller than the second depth, and the first depth is larger than the third depth, and the side wall of the first tube (1) in the third depth is devoid of through-holes.

2. The geothermal well according to claim 1, **characterized in that** the side walls of the first tube (1), of the second tube (2) and of the third tube (3) are gastight, at least one of the first tube (1), the second tube (2) and the third tube (3) is assembled from a plurality of segments and a gastight sealing is provided between said segments.

3. The geothermal well according to claim 1, **characterized in that** the second tube (2) is gastight to a pressure difference of at least 74 MPa and the third tube is gastight to a pressure difference of at least 36 MPa.

4. The geothermal well according to claim 1, **characterized in that** a second sealing element (23) is disposed in the first interspace (20) above the first sealing element (22), wherein the first sealing element (22) and the second sealing element (23) form a closed segment comprising a heat insulating material.

5. The geothermal well according to claim 1, **characterized in that** the third depth is 30% to 80%, preferably 40% to 70% of the second depth.

6. The geothermal well according to claim 1, **characterized in that** the first depth is at least 50%, preferably at least 70%, more preferably at least 90%, most preferably at least 99% of the second depth.

7. The geothermal well according to claim 1, **characterized in that** the first sealing element (22) is a packer.

8. The geothermal well according to claim 1, **characterized in that** the fist tube (1), the second tube (2) and the third tube (3) are arranged coaxially with each other.

9. The geothermal well according to claim 1, **characterized in that** side wall of the first tube (1) is thermally insulated at least below the through-holes (21), preferably thermally insulated along its full length.

10. Method for establishing a geothermal well according to claim 1 from a well initially comprising:
a second tube (2), formed by a casing tube, having a closed bottom in a second depth, a second inner diameter, and a second outer diameter and
a third tube (3), formed by a casing tube, having a closed bottom in a third depth, a third inner diameter larger than the second outer diameter, and a third outer diameter,
wherein the second tube (2) is inside the third tube (3), a second interspace (30) is present between the second tube (2) and the third tube (3);
wherein the third depth is smaller than the second depth,
wherein the method comprises:
- forming a plurality of through-holes (21) in the second tube (2) above the bottom end of the third tube (3);
- inserting a first tube (1) into the second tube (2) to a first depth smaller than the second depth and larger than the third depth, wherein the first tube (1) comprises at least one opening in the first depth and having a first inner diameter, a first outer diameter, and a side wall which is thermally insulated along at least a segment thereof, and wherein a first interspace (20) is formed between the first tube (1) and the second tube (2), wherein the first tube (1) has at least one opening in fluid communication with the first interspace (20), wherein the through-holes (21) allow fluid communication between the first interspace (20) and the second interspace (30);
- inserting a first sealing element (22) above the through-holes (21) into the interspace (20) between the first tube (1) and the second tube (2);
- inserting a thermally insulating material into the interspace (20) above the first sealing element (22).

11. The method according to claim 10, **characterized in that** the method further comprises inserting a second sealing element (23) above the first sealing element (22) in the first interspace (20).

12. Method for geothermal energy production using a geothermal well according to claim 1, said geothermal well comprising:
a first tube (1) comprising at least one opening in a first depth and having a first inner diameter, a first outer diameter, and a side wall which is thermally insulated along at least a segment thereof;
a second tube (2) having a closed bottom in a second depth, a second inner diameter larger than the first outer diameter, and a second outer diameter;
a third tube (3), formed by a casing tube, having a closed bottom in a third depth, a third inner diameter larger than the second outer diameter, and a third outer diameter,
wherein the first tube (1) is inside the second tube (2), a first interspace (20) is formed between the first tube (1) and the second tube (2), wherein the first tube (1) has at least one opening in fluid communication with the first interspace (20),
wherein the second tube (2) is inside the third tube (3), a second interspace (30) is present between the second tube (2) and the third tube (3);
a plurality of through-holes (21) are formed in the second tube (2) above the bottom of the third tube (3), which allow fluid communication between the first interspace (20) and the second interspace (30), a first sealing element (22) is disposed in the first interspace (20) above the through-holes (21) for preventing an upward flow of fluid in the first interspace (20), and a heat insulating material is disposed in at least a portion of the first interspace (20) above the through-holes (21), wherein a second tube is formed by a casing tube, wherein the third depth is smaller than the second depth, the first depth is smaller than the second depth, and the first depth is larger than the third depth, and the side wall of the first tube in the third depth is devoid of through-holes,
wherein the method comprises
- introducing a fluid into the second interspace (30) of the geothermal well;
- directing the fluid from the second interspace (30) through the through-holes (21) of the second tube into the first interspace (20);
- directing the fluid from the first interspace (20) through the at least one opening of the first tube (1) into the first tube (1) and bringing the fluid to the surface through the first tube (1);
- extracting heat from the fluid,
wherein the fluid directed from the second interspace (30) through the through-holes (21) of the second tube into the first interspace (20) is guided further in the first interspace (20) to the first depth, which is greater than the third depth.

13. The method for geothermal energy production according to claim 12, **characterized in that** the fluid brought to the surface is used directly for doing work by the following steps:
- directing the fluid flowing up through the first tube (1) onto a turbine, which drives an electrical generator,
- directing the fluid out of the turbine and condensing the fluid.

14. The method for geothermal energy production according to claim 12, **characterized by** transferring heat from the heated fluid brought to the surface to a working fluid on the surface.

15. The method for geothermal energy production according to claim 13, **characterized by** using propane as the fluid.

16. The method for geothermal energy production according to claim 12, **characterized by** using water as the fluid.

## Patentansprüche

1. Geothermalschacht, umfassend in einem Bohrloch, das in der Erdkruste gebildet wird:
ein erstes Rohr (1), das mindestens eine Öffnung in einer ersten Tiefe umfasst und einen ersten Innendurchmesser, einen ersten Außendurchmesser und eine Seitenwand, die thermisch entlang mindestens eines Segments davon isoliert ist, aufweist;
ein zweites Rohr (2), das einen geschlossenen Boden in einer zweiten Tiefe, einen zweiten Innendurchmesser, der größer als der erste Außendurchmesser ist, und einen zweiten Außendurchmesser aufweist;
ein drittes Rohr (3), das von einem Gehäuserohr gebildet ist, das einen geschlossenen Boden in einer dritten Tiefe, einen dritten Innendurchmesser, der größer als der zweite Außendurchmesser ist, und einen dritten Außendurchmesser aufweist,
wobei das erste Rohr (1) innerhalb des zweiten Rohrs (2) ist, ein erster Zwischenraum (20) zwischen dem ersten Rohr (1) und dem zweiten Rohr (2) gebildet ist, wobei das erste Rohr (1) mindestens eine Öffnung in Fluidkommunikation mit dem ersten Zwischenraum (20) aufweist,
wobei das zweite Rohr (2) innerhalb des dritten Rohrs (3) ist, ein zweiter Zwischenraum (30) zwischen dem zweiten Rohr (2) und dem dritten Rohr (3) vorhanden ist;
eine Vielzahl von Durchgangslöchern (21) in dem zweiten Rohr (2) über dem Boden des dritten Rohrs (3) gebildet sind, die Fluidkommunikation zwischen dem ersten Zwischenraum (20) und dem zweiten Zwischenraum (30) erlauben, ein erstes Dichtungselement (22) in dem ersten Zwischenraum (20) über den Durchgangslöchern (21) angeordnet ist, um einen Aufwärtsfluss von Fluid in dem ersten Zwischenraum (20) zu verhindern, und ein wärmeisolierendes Material in mindestens einem Abschnitt des ersten Zwischenraums (20) über den Durchgangslöchern (21) angeordnet ist,
**dadurch gekennzeichnet, dass**
das zweite Rohr (2) von einem Gehäuserohr gebildet ist,
wobei die dritte Tiefe kleiner als die zweite Tiefe ist, die erste Tiefe kleiner als die zweite Tiefe ist und die erste Tiefe größer als die dritte Tiefe ist,
und die Seitenwand des ersten Rohrs (1) in der dritten Tiefe frei von Durchgangslöchern ist.

2. Geothermalschacht nach Anspruch 1, **dadurch gekennzeichnet, dass** die Seitenwände des ersten Rohrs (1), des zweiten Rohrs (2) und des dritten Rohrs (3) gasdicht sind, mindestens eines des ersten Rohrs (1), des zweiten Rohrs (2) und des dritten Rohrs (3) aus einer Vielzahl von Segmenten zusammengesetzt ist und eine gasdichte Dichtung zwischen den Segmenten bereitgestellt ist.

3. Geothermalschacht nach Anspruch 1, **dadurch gekennzeichnet, dass** das zweite Rohr (2) bis zu einem Druckunterschied von mindestens 74 MPa gasdicht ist und das dritte Rohr bis zu einem Druckunterschied von mindestens 36 MPa gasdicht ist.

4. Geothermalschacht nach Anspruch 1, **dadurch gekennzeichnet, dass** ein zweites Dichtungselement (23) in dem ersten Zwischenraum (20) über dem ersten Dichtungselement (22) angeordnet ist, wobei das erste Dichtungselement (22) und das zweite Dichtungselement (23) ein geschlossenes Segment bilden, das ein wärmeisolierendes Material umfasst.

5. Geothermalschacht nach Anspruch 1, **dadurch gekennzeichnet, dass** die dritte Tiefe 30% bis 80%, bevorzugt 40% bis 70% der zweiten Tiefe ist.

6. Geothermalschacht nach Anspruch 1, **dadurch gekennzeichnet, dass** die erste Tiefe mindestens 50%, bevorzugt mindestens 70%, bevorzugter mindestens 90%, am meisten bevorzugt mindestens 99% der zweiten Tiefe ist.

7. Geothermalschacht nach Anspruch 1, **dadurch gekennzeichnet, dass** das erste Dichtungselement (22) ein Packer ist.

8. Geothermalschacht nach Anspruch 1, **dadurch gekennzeichnet, dass** das erste Rohr (1), das zweite Rohr (2) und das dritte Rohr (3) koaxial miteinander eingerichtet sind.

9. Geothermalschacht nach Anspruch 1, **dadurch gekennzeichnet, dass** eine Seitenwand des ersten Rohrs (1) thermisch mindestens unterhalb der Durchgangslöcher (21) isoliert ist, bevorzugt thermisch entlang seiner gesamten Länge isoliert ist.

10. Verfahren zum Herstellen eines Geothermalschachts nach Anspruch 1 aus einem Schacht, der anfänglich umfasst:
ein zweites Rohr (2), das von einem Gehäuserohr gebildet ist, das einen geschlossenen Boden in einer zweiten Tiefe, einen zweiten Innendurchmesser und einen zweiten Außendurchmesser aufweist, und
ein drittes Rohr (3), das von einem Gehäuserohr gebildet ist, das einen geschlossenen Boden in einer dritten Tiefe, einen dritten Innendurchmesser, der größer als der zweite Außendurchmesser ist, und einen dritten Außendurchmesser aufweist,
wobei das zweite Rohr (2) innerhalb des dritten Rohrs (3) ist, ein zweiter Zwischenraum (30) zwischen dem zweiten Rohr (2) und dem dritten Rohr (3) vorhanden ist;
wobei die dritte Tiefe kleiner als die zweite Tiefe ist,
wobei das Verfahren umfasst:
- Bilden einer Vielzahl von Durchgangslöchern (21) in dem zweiten Rohr (2) über dem Bodenende des dritten Rohrs (3);
- Einsetzen eines ersten Rohrs (1) in das zweite Rohr (2), bis zu einer ersten Tiefe, die kleiner als die zweite Tiefe und größer als die dritte Tiefe ist, wobei das erste Rohr (1) mindestens eine Öffnung in der ersten Tiefe umfasst und einen ersten Innendurchmesser, einen ersten Außendurchmesser und eine Seitenwand, die thermisch entlang mindestens eines Segments davon isoliert ist, aufweist und wobei ein erster Zwischenraum (20) zwischen dem ersten Rohr (1) und dem zweiten Rohr (2) gebildet ist, wobei das erste Rohr (1) mindestens eine Öffnung in Fluidkommunikation mit dem ersten Zwischenraum (20) aufweist, wobei die Durchgangslöcher (21) Fluidkommunikation zwischen dem ersten Zwischenraum (20) und dem zweiten Zwischenraum (30) erlauben;
- Einsetzen eines ersten Dichtungselements (22) über den Durchgangslöchern (21) in den Zwischenraum (20) zwischen dem ersten Rohr (1) und dem zweiten Rohr (2);
- Einsetzen eines thermisch isolierenden Materials in den Zwischenraum (20) über dem ersten Dichtungselement (22).

11. Verfahren nach Anspruch 10, **dadurch gekennzeichnet, dass** das Verfahren weiter Einsetzen eines zweiten Dichtungselements (23) über dem ersten Dichtungselement (22) in dem ersten Zwischenraum (20) umfasst.

12. Verfahren zur geothermischen Energieerzeugung unter Verwendung eines Geothermalschachts nach Anspruch 1, wobei der Geothermalschacht umfasst:
ein erstes Rohr (1), das mindestens eine Öffnung in einer ersten Tiefe umfasst und einen ersten Innendurchmesser, einen ersten Außendurchmesser und eine Seitenwand, die thermisch entlang mindestens eines Segments davon isoliert ist, aufweist;
ein zweites Rohr (2), das einen geschlossenen Boden in einer zweiten Tiefe, einen zweiten Innendurchmesser, der größer als der erste Außendurchmesser ist, und einen zweiten Außendurchmesser aufweist;
ein drittes Rohr (3), das von einem Gehäuserohr gebildet ist, das einen geschlossenen Boden in einer dritten Tiefe, einen dritten Innendurchmesser, der größer als der zweite Außendurchmesser ist, und einen dritten Außendurchmesser aufweist,
wobei das erste Rohr (1) innerhalb des zweiten Rohrs (2) ist, ein erster Zwischenraum (20) zwischen dem ersten Rohr (1) und dem zweiten Rohr (2) gebildet ist, wobei das erste Rohr (1) mindestens eine Öffnung in Fluidkommunikation mit dem ersten Zwischenraum (20) aufweist,
wobei das zweite Rohr (2) innerhalb des dritten Rohrs (3) ist, ein zweiter Zwischenraum (30) zwischen dem zweiten Rohr (2) und dem dritten Rohr (3) vorhanden ist;
eine Vielzahl von Durchgangslöchern (21) in dem zweiten Rohr (2) über dem Boden des dritten Rohrs (3) gebildet sind, die Fluidkommunikation zwischen dem ersten Zwischenraum (20) und dem zweiten Zwischenraum (30) erlauben, ein erstes Dichtungselement (22) in dem ersten Zwischenraum (20) über den Durchgangslöchern (21) angeordnet ist, um einen Aufwärtsfluss von Fluid in dem ersten Zwischenraum (20) zu verhindern, und ein wärmeisolierendes Material in mindestens einem Abschnitt des ersten Zwischenraums (20) über den Durchgangslöchern (21) angeordnet ist, wobei ein zweites Rohr von einem Gehäuserohr gebildet ist, wobei die dritte Tiefe kleiner als die zweite Tiefe ist, die erste Tiefe kleiner als die zweite Tiefe ist und die erste Tiefe größer als die dritte Tiefe ist und die Seitenwand des ersten Rohrs in der dritten Tiefe frei von Durchgangslöchern ist,
wobei das Verfahren umfasst
- Einleiten eines Fluids in den zweiten Zwischenraum (30) des Geothermalschachts;
- Leiten des Fluids von dem zweiten Zwischenraum (30) durch die Durchgangslöcher (21) des zweiten Rohrs in den ersten Zwischenraum (20);
- Leiten des Fluids von dem ersten Zwischenraum (20) durch mindestens eine Öffnung des ersten Rohrs (1) in das erste Rohr (1) und Bringen des Fluids an die Oberfläche, durch das erste Rohr (1);
- Extrahieren von Wärme aus dem Fluid,
wobei das Fluid, das von dem zweiten Zwischenraum (30) durch die Durchgangslöcher (21) des zweiten Rohrs in den ersten Zwischenraum (20) geleitet wird, weiter in dem ersten Zwischenraum (20) zu der ersten Tiefe geführt wird, die größer als die dritte Tiefe ist.

13. Verfahren zur geothermischen Energieerzeugung nach Anspruch 12, **dadurch gekennzeichnet, dass** das Fluid, das an die Oberfläche gebracht wird, durch die folgenden Schritte direkt zur Arbeitsverrichtung verwendet wird:
- Leiten des Fluids, das durch das erste Rohr (1) fließt, auf eine Turbine, die einen elektrischen Generator antreibt,
- Leiten des Fluids aus der Turbine und Kondensieren des Fluids.

14. Verfahren zur geothermischen Energieerzeugung nach Anspruch 12, **gekennzeichnet durch** Überführen von Wärme von dem erwärmten Fluid, das an die Oberfläche gebracht wurde, auf ein Arbeitsfluid an der Oberfläche.

15. Verfahren zur geothermischen Energieerzeugung nach Anspruch 13, **gekennzeichnet durch** Verwenden von Propan als das Fluid.

16. Verfahren zur geothermischen Energieerzeugung nach Anspruch 12, **gekennzeichnet durch** Verwenden von Wasser als das Fluid.

## Revendications

1. Puits géothermique comprenant dans un puits de forage formé dans la croûte terrestre :
un premier tube (1) comprenant au moins une ouverture dans une première profondeur et présentant un premier diamètre interne, un premier diamètre externe, et une paroi latérale qui est isolée thermiquement le long d'au moins un segment de celle-ci ;
un deuxième tube (2) présentant un fond fermé dans une deuxième profondeur, un deuxième diamètre interne plus grand que le premier diamètre externe, et un deuxième diamètre externe ;
un troisième tube (3), formé par un tube de cuvelage, présentant un fond fermé dans une troisième profondeur, un troisième diamètre interne plus grand que le deuxième diamètre externe, et un troisième diamètre externe,
dans lequel le premier tube (1) est à l'intérieur du deuxième tube (2), un premier intervalle (20) est formé entre le premier tube (1) et le deuxième tube (2), dans lequel le premier tube (1) présente au moins une ouverture en communication fluidique avec le premier intervalle (20),
dans lequel le deuxième tube (2) est à l'intérieur du troisième tube (3), un second intervalle (30) est présent entre le deuxième tube (2) et le troisième tube (3) ;
une pluralité de trous traversants (21) sont formés dans le deuxième tube (2) au-dessus du fond du troisième tube (3), qui permettent une communication fluidique entre le premier intervalle (20) et le deuxième intervalle (30), un premier élément d'étanchéité (22) est disposé dans le premier intervalle (20) au-dessus des trous traversants (21) pour empêcher un écoulement vers le haut de fluide dans le premier intervalle (20), et un isolant thermique est disposé dans au moins une portion du premier intervalle (20) au-dessus des trous traversants (21),
**caractérisé en ce que**
le deuxième tube (2) est formé par un tube de cuvelage,
dans lequel la troisième profondeur est plus petite que la deuxième profondeur, la première profondeur est plus petite que la deuxième profondeur, et la première profondeur est plus grande que la troisième profondeur, et la paroi latérale du premier tube (1) dans la troisième profondeur est dépourvue de trous traversants.

2. Puits géothermique selon la revendication 1, **caractérisé en ce que** les parois latérales du premier tube (1), du deuxième tube (2) et du troisième tube (3) sont étanches aux gaz, au moins l'un du premier tube (1), du deuxième tube (2) et du troisième tube (3) est assemblé à partir d'une pluralité de segments et un joint d'étanchéité aux gaz est prévu entre lesdits segments.

3. Puits géothermique selon la revendication 1, **caractérisé en ce que** le deuxième tube (2) est étanche aux gaz à une différence de pression d'au moins 74 MPa et le troisième tube est étanche aux gaz à une différence de pression d'au moins 36 MPa.

4. Puits géothermique selon la revendication 1, **caractérisé en ce qu'**un second élément d'étanchéité (23) est disposé dans le premier intervalle (20) au-dessus du premier élément d'étanchéité (22), dans lequel le premier élément d'étanchéité (22) et le second élément d'étanchéité (23) forment un segment fermé comprenant un isolant thermique.

5. Puits géothermique selon la revendication 1, **caractérisé en ce que** la troisième profondeur représente 30 % à 80 %, de préférence 40 % à 70 % de la deuxième profondeur.

6. Puits géothermique selon la revendication 1, **caractérisé en ce que** la première profondeur représente au moins 50 %, de préférence au moins 70 %, plus préférentiellement au moins 90 %, le plus préférentiellement au moins 99 % de la deuxième profondeur.

7. Puits géothermique selon la revendication 1, **caractérisé en ce que** le premier élément d'étanchéité (22) est une garniture.

8. Puits géothermique selon la revendication 1, **caractérisé en ce que** le premier tube (1), le deuxième tube (2) et le troisième tube (3) sont agencés coaxialement les uns aux autres.

9. Puits géothermique selon la revendication 1, **caractérisé en ce que** la paroi latérale du premier tube (1) est isolée thermiquement au moins en dessous des trous traversants (21), de préférence isolée thermiquement sur toute sa longueur.

10. Procédé d'établissement d'un puits géothermique selon la revendication 1 à partir d'un puits comprenant initialement :
un deuxième tube (2), formé par un tube de cuvelage, présentant un fond fermé dans une deuxième profondeur, un deuxième diamètre interne, et un deuxième diamètre externe et
un troisième tube (3), formé par un tube de cuvelage, présentant un fond fermé dans une troisième profondeur, un troisième diamètre interne plus grand que le deuxième diamètre externe, et un troisième diamètre externe,
dans lequel le deuxième tube (2) est à l'intérieur du troisième tube (3), un deuxième intervalle (30) est présent entre le deuxième tube (2) et le troisième tube (3) ;
dans lequel la troisième profondeur est plus petite que la deuxième profondeur,
dans lequel le procédé comprend :
- la formation d'une pluralité de trous traversants (21) dans le deuxième tube (2) au-dessus de l'extrémité de fond du troisième tube (3) ;
- l'insertion d'un premier tube (1) dans le deuxième tube (2) à une première profondeur plus petite que la deuxième profondeur et plus grande que la troisième profondeur, dans lequel le premier tube (1) comprend au moins une ouverture dans la première profondeur et présentant un premier diamètre interne, un premier diamètre externe, et une paroi latérale qui est isolée thermiquement le long d'au moins un segment de celle-ci, et dans lequel un premier intervalle (20) est formé entre le premier tube (1) et le deuxième tube (2), dans lequel le premier tube (1) présente au moins une ouverture en communication fluidique avec le premier intervalle (20), dans lequel les trous traversants (21) permettent une communication fluidique entre le premier intervalle (20) et le deuxième intervalle (30) ;
- l'insertion d'un premier élément d'étanchéité (22) au-dessus des trous traversants (21) dans l'intervalle (20) entre le premier tube (1) et le deuxième tube (2) ;
- l'insertion d'un matériau thermiquement isolant dans l'intervalle (20) au-dessus du premier élément d'étanchéité (22).

11. Procédé selon la revendication 10, **caractérisé en ce que** le procédé comprend en outre l'insertion d'un second élément d'étanchéité (23) au-dessus du premier élément d'étanchéité (22) dans le premier intervalle (20).

12. Procédé de production d'énergie géothermique à l'aide d'un puits géothermique selon la revendication 1, ledit puits géothermique comprenant :
un premier tube (1) comprenant au moins une ouverture dans une première profondeur et présentant un premier diamètre interne, un premier diamètre externe, et une paroi latérale qui est isolée thermiquement le long d'au moins un segment de celle-ci ;
un deuxième tube (2) présentant un fond fermé dans une deuxième profondeur, un deuxième diamètre interne plus grand que le premier diamètre externe, et un deuxième diamètre externe ;
un troisième tube (3), formé par un tube de cuvelage, présentant un fond fermé dans une troisième profondeur, un troisième diamètre interne plus grand que le deuxième diamètre externe, et un troisième diamètre externe,
dans lequel le premier tube (1) est à l'intérieur du deuxième tube (2), un premier intervalle (20) est formé entre le premier tube (1) et le deuxième tube (2), dans lequel le premier tube (1) présente au moins une ouverture en communication fluidique avec le premier intervalle (20),
dans lequel le deuxième tube (2) est à l'intérieur du troisième tube (3), un second intervalle (30) est présent entre le deuxième tube (2) et le troisième tube (3) ;
une pluralité de trous traversants (21) sont formés dans le deuxième tube (2) au-dessus du fond du troisième tube (3), qui permettent une communication fluidique entre le premier intervalle (20) et le deuxième intervalle (30), un premier élément d'étanchéité (22) est disposé dans le premier intervalle (20) au-dessus des trous traversants (21) pour empêcher un écoulement vers le haut de fluide dans le premier intervalle (20), et un isolant thermique est disposé dans au moins une portion du premier intervalle (20) au-dessus des trous traversants (21), dans lequel un deuxième tube (2) est formé par un tube de cuvelage, dans lequel la troisième profondeur est plus petite que la deuxième profondeur, la première profondeur est plus petite que la deuxième profondeur, et la première profondeur est plus grande que la troisième profondeur, et la paroi latérale du premier tube dans la troisième profondeur est dépourvue de trous traversants,
dans lequel le procédé comprend
- l'introduction d'un fluide dans le deuxième intervalle (30) du puits géothermique ;
- la direction du fluide depuis le deuxième intervalle (30) à travers les trous traversants (21) du deuxième tube jusque dans le premier intervalle (20) ;
- la direction du fluide depuis le premier intervalle (20) à travers l'au moins une ouverture du premier tube (1) jusque dans le premier tube (1) et l'apport du fluide à la surface à travers le premier tube (1) ;
- l'extraction de chaleur depuis le fluide,
dans lequel le fluide dirigé depuis le deuxième intervalle (30) à travers les trous traversants (21) du deuxième tube jusque dans le premier intervalle (20) est guidé en outre dans le premier intervalle (20) vers la première profondeur, qui est plus grande que la troisième profondeur.

13. Procédé de production d'énergie géothermique selon la revendication 12, **caractérisé en ce que** le fluide amené à la surface est utilisé directement pour effectuer un travail par les étapes suivantes :
- la direction du fluide s'écoulant vers le haut à travers le premier tube (1) sur une turbine, qui entraîne un générateur électrique,
- la direction du fluide hors de la turbine et la condensation du fluide.

14. Procédé de production d'énergie géothermique selon la revendication 12, **caractérisé par** un transfert de chaleur du fluide chauffé amené à la surface à un fluide de travail sur la surface.

15. Procédé de production d'énergie géothermique selon la revendication 13, **caractérisé par** l'utilisation de propane en tant que fluide.

16. Procédé de production d'énergie géothermique selon la revendication 12, **caractérisé par** l'utilisation d'eau en tant que fluide.
